# EUROPÄISCHE PATENTSCHRIFT

(11) **EP 2 774 707 B1**
(45) Veröffentlichungstag und Bekanntmachung des Hinweises auf die Patenterteilung: **26.04.2017**
(21) Anmeldenummer: 13157660.5
(22) Anmeldetag: 04.03.2013
(51) Int. Cl.: B23D 37/10, B23D 41/06

(54) **Innenräummaschine**
Internal broaching machine
Machine à brocher l'intérieur

(43) Veröffentlichungstag der Anmeldung: 10.09.2014
(73) Patentinhaber: Gierth, Lothar, 58802 Balve (DE)
(72) Erfinder: Gierth, Lothar, 58802 Balve (DE)
(74) Vertreter: Patentanwälte Dörner & Kötter PartG mbB

(56) Entgegenhaltungen:
- CH-A5- 565 618
- DE-A1- 1 931 064
- DE-A1- 2 741 918
- DE-A1- 3 937 997
- JP-U- S5 351 688
- JP-Y- S5 528 422
- US-A- 1 233 373
- US-A- 5 489 169
- DATABASE WPI Week 201166 Thomson Scientific, London, GB; AN 2011-M46852 XP002708148, -& CN 102 172 890 A (HARBIN BEARING GROUP CO) 7. September 2011 (2011-09-07)

## Beschreibung

Die Erfindung betrifft eine Innenräummaschine zum Räumen von Nabennuten. Die JP-S-55-28422-U, die als nächstliegender Stand der Technik angesehen wird, offenbart eine Innenräummaschine zum Räumen von Narbennuten, umfassend einen Tisch, der der Aufnahme eines Werkstücks dient. Senkrecht zum Tisch ist ein Räumwerkzeug angeordnet, das durch eine Durchführung des Tisches verfahrbar ist. Auf einer Basis ist eine Werkzeugführung mit einem an ihrer den Räumzähnen des Räumwerkzeugs abgewandten Innenseite angeordneten, in Richtung des Aufspanntischs zulaufenden konischen Führungsgrund positioniert. Ein Keilstück (12) ist mittels einer Schraube von der oberen Seite des Aufspanntischs zur Abstützung des Räumwerkzeugs entlang des konischen Führungsgrundes (9) bewegbar.

Zum Räumen von Nabennuten kommen regelmäßig Innenräummaschinen in senkrechter Bauart zum Einsatz. Derartige Maschinen im Wesentlichen aus einem Maschinengestell sowie einem Aufspanntisch, auf dem das zu bearbeitende Werkstück aufgenommen wird. Rechtwinklig zu dem Aufspanntisch ist ein Ziehschlitten angeordnet, welcher das Räumwerkzeug durch das Werkstück zieht und die Zerspanungskräfte aufbringt. Als Räumwerkzeug zum Räumen von Nabennuten kommen insbesondere Flachräumwerkzeuge zum Einsatz.

Zur Führung des Räumwerkzeugs beim Räumprozess ist es bekannt, an der das Werkstück aufnehmenden Werkstückaufnahme eine Räumwerkzeugführung anzuordnen, welche derart ausgelegt ist, dass das Räumwerkzeug im Rückhub frei von der Führungswand durch die Werkstückbohrung geführt werden kann. Im Rückhub wird das Räumwerkzeug bei manchen Maschinen von einem Luftzylinder durch ein Andrückteil nach hinten in die Führung gedrückt. Dabei wird immer mit einer Beilage gearbeitet, die von einem Bediener zwischen Räumwerkzeugführung und Räumwerkzeug eingesetzt wird.

Die Handhabung dieser Innenräummaschinen gestaltet sich sehr aufwendig. Zum einen muss bei jedem Werkstück eine Beilage durch einen Bearbeiter eingesetzt werden. Darüber hinaus muss das Räumwerkzeug mit Spiel ausreichend beweglich an dem Ziehschlitten angeordnet sein, damit es durch den Luftzylinder der Führung gedrückt werden kann. Aufgrund dieses Spiels ist jedoch ein erhebliches Schwingen des Räumwerkzeugs nicht zu vermeiden, wodurch es zu Ungenauigkeiten im Räumprozess kommen kann.

Hier will die Erfindung Abhilfe schaffen. Der Erfindung liegt die Aufgabe zugrunde, eine Innenräummaschine zum Räumen von Nabennuten zu schaffen, bei der ein manuelles Einfügen von Beilagen nicht erforderlich ist und die einen zuverlässigen Räumprozess gewährleistet. Gemäß der Erfindung wird diese Aufgabe durch die Merkmale des kennzeichnenden Teils des Patentanspruchs 1 gelöst.

Mit der Erfindung ist eine Innenräummaschine zum Räumen von Nabennuten geschaffen, welche ein manuelles Zuführen von Beilagen durch einen Bediener nicht erfordert und die einen zuverlässigen Räumprozess gewährleistet. Durch die konische Ausbildung des Führungsgrundes der Werkzeugführung der Werkstückaufnahme im Zusammenspiel mit dem Keilstück ist ein gleichmäßiger Anpressdruck des Räumwerkzeugs an das zu bearbeitende Werkstück erzielt. Das Keilstück wird über einen Antrieb senkrecht entlang des konischen Führungsgrundes in die Werkstückaufnahme hineingefahren, wodurch kein manuelles Einfügen einer Beilage erforderlich ist. Zur Freigabe des Räumwerkzeugs ist das Keilstück entlang des konischen Führungsgrundes der Werkzeugführung wieder herausfahrbar, ohne dass es einer Bewegung des Räumwerkzeugs bedarf.

In Weiterbildung der Erfindung ist der Antrieb durch einen Linearantrieb, vorzugsweise einen pneumatischen oder hydraulischen Antrieb gebildet. Hierdurch ist eine exakte automatisierte Zuführung des Keilstücks erzielbar.

In Ausgestaltung der Erfindung ist das Räumwerkzeug an dem Ziehschlitten bezüglich aller Richtungen fest eingespannt. Hierdurch sind Schwingungen des Räumwerkzeugs vermieden, wodurch eine hohe Räumgenauigkeit bewirkt ist.

In weiterer Ausgestaltung der Erfindung ist die Werkstückaufnahme auf einem Schlitten angeordnet, der zusammen mit der Werkstückaufnahme über einen Antrieb horizontal entlang des Aufspanntischs verfahrbar ist. Hierdurch ist eine automatische Freistellung des Räumwerkzeugs in dem bearbeiteten Werkstück erzielbar. Nach Herausfahren des Keilstücks kann das von der Werkstückaufnahme aufgenommene Werkstück über den Schlitten relativ zum Räumwerkzeug bewegt werden, wodurch die Räumzähne des Räumwerkzeugs außer Eingriff gebracht werden. Vorzugsweise ist der Schlitten über einen Linearantrieb verfahrbar, der bevorzugt durch einen Schrittmotor gebildet ist. Hierdurch ist eine exakte Positionierung des Schlittens ermöglicht. Dabei ist der Linearantrieb bevorzugt über eine Kugelumlaufspindel mit dem Schlitten verbunden.

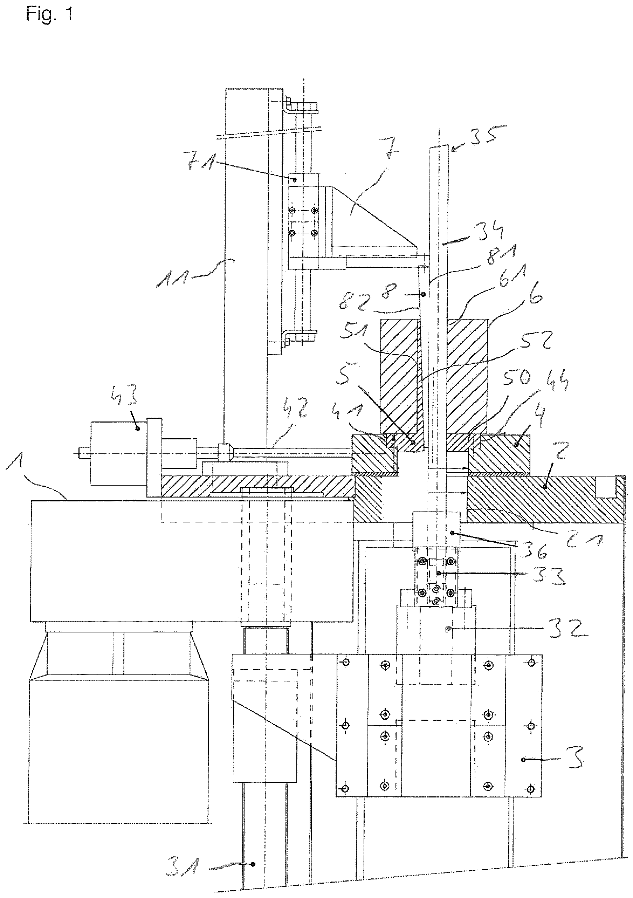

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt
die schematische Darstellung einer Innenräummaschine zum Räumen von Nabennuten.

Die als Ausführungsbeispiel gewählte Innenräummaschine besteht im Wesentlichen aus einem Maschinengestell 1, das einen horizontalen Aufspanntisch 2 aufnimmt sowie einen Ziehschlitten 3, über den ein Räumwerkzeug 34 vertikal bewegbar ist. Auf dem Aufspanntisch 2 ist ein Schlitten 4 verschiebbar angeordnet, der eine Werkstückaufnahme 5 zur Aufnahme eines Werkstücks 6 aufnimmt. Weiterhin ist an dem Maschinengestell 1 ein über einen Linearantrieb 71 vertikal verfahrbarer Ausleger 7 angeordnet, der ein Keilstück 8 aufnimmt.

Der Ziehschlitten 3 ist über einen Kugelgewindetrieb 31 vertikal verfahrbar. Erweist einen Parallelgreifer 32 auf, der einen Räumwerkzeugspanner 33 zur Einspannung eines Räumwerkzeugs 34 aufnimmt. Das - in Figur 1 lediglich schematisch dargestellte - Räumwerkzeug 34 ist im Ausführungsbeispiel ein Flachräumwerkzeug und ist in dem Räumwerkzeugspanner 33 bezüglich aller Richtungen fest eingespannt. Das Räumwerkzeug 34 ist durch eine in dem Aufspanntisch 2 angeordnete Durchführung 21 lotrecht zu dem Aufspanntisch 2 durch diesen bewegbar.

Auf dem Aufspanntisch 2 ist ein Schlitten 4 über- nicht dargestellte - Nuten linear geführt verschiebbar angeordnet. Der Schlitten 4 ist über eine Kugelumlaufspindel 42 mit einem Schrittmotor 43 verbunden, über den der Schlitten 4 verschiebbar ist. Der Schlitten 4 ist mit einer Stufenbohrung 44 versehen, die mit der Durchführung 21 des Aufspanntischs 2 fluchtet und deren Durchmesser kleiner ist als der Durchmesser der Durchführung 21. Durch die Stufenbohrung 44 ist eine Aufnahme 41 für die Werkstückaufnahme 5 gebildet.

Die Werkstückaufnahme 5 besteht im Wesentlichen aus einem Sockel 50, an dem eine senkrecht zu diesem angeordnete Führung 51 angeformt ist, die einen konischen Führungsgrund 52 aufweist. Die Führung 51 ist kleiner als die Bohrung 61 des zu bearbeitenden Werkstücks 6. Der Sockel 50 der Werkstückaufnahme ist außen stufig ausgebildet und korrespondiert mit der durch die Stufenbohrung 44 im Schlitten 4 ausgebildete Aufnahme 41, in die der Sockel 50 eingesetzt ist.

Beabstandet zu dem Räumwerkzeug 34 ist an dem Maschinengestell 1 ein lotrechter Ständer 11 angeordnet, an dem ein Ausleger 7 vertikal verschiebbar gelagert ist. Der Ausleger 7 ist mit einem Linearantrieb 71 verbunden, über den er aufwärts bzw. abwärts bewegbar ist. An seinem dem Ständer 11 abgewandten Ende ist an dem Ausleger 7 ein Keilstück 8 angeordnet. Das Keilstück 8 weist an seiner dem Räumwerkzeug 34 zugewandten Seite eine ebene, senkrecht zum Aufspanntisch 2 verlaufende Anlagefläche 81 auf. Die der Anlagefläche 81 gegenüberliegende Druckfläche 82 ist in einem Steigungswinkel an der Anlagefläche 81 angestellt, der dem Steigungswinkel des konischen Führungsgrundes 52 der Führung 51 der Werkstückaufnahme 5 entspricht.

Zum Innenräumen einer Nabennut in einem Werkstück 6 wird dieses zunächst auf der Werkstückaufnahme 5 platziert, wobei die Führung 51 durch die Bohrung 61 des Werkstücks 6 hindurchragt. Nachfolgend wird das Räumwerkzeug 34 durch die Bohrung 61 des Werkstücks 6 hindurchgeführt. Dabei ist der Durchmesser des Räumwerkzeugs kleiner als der Durchmesser der von der Führung 51 durchdrungenen Bohrung 61 des Werkstücks 6. Nachfolgend wird der Ausleger 7 über den Linearmotor 71 in Richtung des Aufspanntischs 2 bewegt, wobei das Keilstück 8 entlang des Führungsgrundes 52 der Führung 51 bewegt wird, bis die Anlagefläche 51 an der den Räumzähnen 35 entgegengesetzten Seite anliegt. Durch die winklig an dem konischen Führungsgrund 52 angestellte Druckfläche 82 des Keilstücks 8 wird das Räumwerkzeug 34 für den nachfolgenden Räumprozess abgestützt.

Es wird nach Möglichkeit einzügig geräumt. Das Differenzmaß zwischen der Höhe des ersten und des letzten Zahns 35 des Räumwerkzeugs 34 ist hierbei so groß, dass bei einem Durchzug die gesamte Nutentiefe geräumt wird. In Abhängigkeit der Länge der zu räumenden Nut muss das Räumwerkzeug 34 so ausgebildet werden, dass das Differenzmaß zu klein wird, um die gesamte Nutentiefe zu erreichen. In diesem Falle muss ein zweiter oder auch ein dritter Durchzug erfolgen. Durch die in Längsrichtung zunehmende Dicke des Keilstücks 8 ist bei jedem Durchzug die erforderliche Abstützung des Räumwerkzeugs 34 gewährleistet. Der jeweilige Freiraum zum Einführen des Keilstücks 8 wird durch das Verfahren des Schlittens und somit der Führung 51 entlang des Aufspanntischs 2 gebildet. Ein Verschwenken des Räumwerkzeugs 34 ist nicht erforderlich. Durch die Zuführung des Keilstücks 8 von oben ist diese nicht durch Späne beeinträchtigt.

## Patentansprüche

1. Innenräummaschine zum Räumen von Nabennuten, umfassend einen Aufspanntisch (2) mit wenigstens einer Werkstückaufnahme (5), sowie wenigstens ein senkrecht zum Aufspanntisch angeordnetes Räumwerkzeug (34), das über einen Ziehschlitten (3) durch eine Durchführung (21) des Aufspanntischs verfahrbar ist, wobei die Werkstückaufnahme (5) eine Werkzeugführung (51) mit einem an ihrer den Räumzähnen (35) des Räumwerkzeugs (34) abgewandten Innenseite angeordneten, in Richtung des Aufspanntischs zulaufenden konischen Führungsgrund (52) aufweist, wobei ein Keilstück (8) angeordnet ist, das über einen Antrieb von der dem Ziehschlitten (3) entgegengesetzten Seite des Aufspanntischs (2) zur Abstützung des Räumwerkzeugs (34) entlang des konischen Führungsgrundes (52) in die Werkstückaufnahme (5) hineinfahrbar und zur Freigabe des Räumwerkzeugs (34) wieder herausfahrbar ist.

2. Innenräummaschine nach Anspruch 1, **dadurch gekennzeichnet, dass** der Antrieb durch einen Linearantrieb (71), vorzugsweise einen pneumatischen oder hydraulischen Antrieb gebildet ist.

3. Innenräummaschine nach Anspruch 1 oder 2, **dadurch gekennzeichnet, dass** das Räumwerkzeug (34) an dem Ziehschlitten (3) bzgl. aller Richtungen fest eingespannt ist.

4. Innenräummaschine nach einem der Ansprüche 1 bis 3, **dadurch gekennzeichnet, dass** die Werkstückaufnahme (5) auf einem Schlitten (4) angeordnet ist, der zusammen mit der Werkstückaufnahme (5) über einen Antrieb horizontal entlang des Aufspanntischs (2) verfahrbar ist.

5. Innenräummaschine nach Anspruch 4, **dadurch gekennzeichnet, dass** der Schlitten (4) über einen Linearantrieb verfahrbar ist, der vorzugsweise durch einen Schrittmotor (43) gebildet ist.

6. Innenräummaschine nach Anspruch 5, **dadurch gekennzeichnet, dass** der Linearantrieb über eine Kugelumlaufspindel (42) mit dem Schlitten (4) verbunden ist.

## Claims

1. Internal broaching machine for clearing hub keyways, comprising of a clamping table (2) with at least one workpiece holder (5), as well as at least one broaching tool (34) positioned vertically to the clamping table which can be driven through a duct (21) of the clamping table (2) by means of a drawing carriage (3), whereby the workpiece holder (5) exhibits a tool guide (51) with a cone-shape guide base (52) running in the direction of the clamping table and located on the inner side facing away from the broaching teeth (35) of the broaching tool (34), whereby a wedge (8) is positioned which can be driven along the cone-shaped base (52) into the workpiece holder (5) and driven back out again to release the broaching tool (34) by a drive from the side of the clamping table (2) opposite the drawing carriage (3) to support the broaching tool (34).

2. Internal broaching machine according to claim 1, **characterized in that** the drive is formed by a linear drive (71) consisting preferably of a pneumatic or hydraulic drive.

3. Internal broaching machine according to claim 1 or 2, **characterized in that** the broaching tool (34) is clamped tight onto the drawing carriage (3) in respect of all directions.

4. Internal broaching machine according to claim 1 to 3, **characterized in that** the workpiece holder (5) is mounted on a carriage (4) which, together with the workpiece holder (5) can be driven horizontally along the clamping table (2) by a drive.

5. Internal broaching machine according to claim 4, **characterized in that** the carriage (4) is driven by a linear drive which consists preferably of a step motor (43).

6. Internal broaching machine according to claim 5, **characterized in that** the linear drive is connected to the carriage (4) by a ball screw (42).

## Revendications

1. Machine à brocher l'intérieur pour rainure dans moyeu, comprenant une table de serrage (2) ayant au moins une réception de pièce à brocher (5) ainsi qu'au moins un outil à brocher (34) disposé verticalement relativement à la table de serrage et déplaçable à l'aide d'un chariot à traîner (3) à travers un passage (21) de la table de serrage, la réception de la pièce à brocher (5) présentant un guidage d'outil (51) ayant un fond de guidage (5) se rétrécissant de manière conique vers la table de serrage et disposé à la face intérieure détournée des dents à brocher (35) de l'outil à brocher (34), une pièce de calage (8) étant agencée pour permettre l'entrée dans la réception de pièce à brocher (5) via un entraînement du côté opposé de la table de serrage (2) au chariot à trainer (3) en vue d'appuyer l'outil à brocher (34) le long du fond de guidage (52) conique et pour permettre la sortie en vue de la libération de l'outil à brocher (34).

2. Machine à brocher l'intérieur selon la revendication 1, **caractérisée en ce que** l'entraînement est réalisé par un entraînement linéaire (71), de préférence un entraînement pneumatique ou hydraulique.

3. Machine à brocher l'intérieur selon la revendication 1 ou 2, **caractérisée en ce que** l'outil à brocher (34) est solidairement serré pour toutes les directions sur un chariot à traîner (3).

4. Machine à brocher l'intérieur selon l'une quelconque des revendications 1 à 3, **caractérisée en ce que** la réception de pièce à brocher (5) est agencée sur un chariot (4) qui est déplaçable horizontalement le long de la table de serrage (2) avec la réception de pièce à brocher (5) via un entraînement.

5. Machine à brocher l'intérieur selon la revendication 4, **caractérisée en ce que** le chariot (4) est déplaçable via un entraînement linéaire qui est constitué de préférence par une unité moteur pas à pas (43).

6. Machine à brocher l'intérieur selon la revendication 5, **caractérisée en ce que** l'entraînement linéaire est relié à un chariot (4) via un vérin à billes.
